# EUROPÄISCHE PATENTANMELDUNG

(11) **EP 2 022 915 A2**
(43) Veröffentlichungstag der Anmeldung: **11.02.2009**
(21) Anmeldenummer: 08012887.9
(22) Anmeldetag: 17.07.2008
(51) Int. Cl.: E05B 73/00, E05B 45/00, G07C 9/00, E05B 47/00, E05B 47/06

(54) **Objektsicherungssystem**

(30) Priorität: 25.07.2007 DE 102007035193; 04.11.2007 DE 102007052911
(71) Anmelder: ASTRA Gesellschaft für Asset Management mbH & Co. KG, 30890 Barsinghausen (DE)
(72) Erfinder: Stobbe, Anatoli, 30890 Barsinghausen (DE); Herrmann, Wilfried, 30453 Hannover (DE)
(74) Vertreter: Patentanwälte Thömen & Körner

(57) **Zusammenfassung**

Es wird ein Objektsicherungssystem, bestehend aus wenigstens einer Station (94) mit Andock-, Identifikations- und Registrierungsmitteln (14,...,14''''') sowie aus mit kompatiblen Andock-, Identifikations- und Registrierungsmitteln ausgestatteten Objekten beschrieben.

## Beschreibung

Die Erfindung betrifft ein Objektsicherungssystem nach den Oberbegriffen der Ansprüche 1 und 2.

Objektsicherungssysteme werden z. B. in Touristenzentren eingesetzt, um Touristen gegen ein Entgelt Fahrzeuge, insbesondere Fahrräder, für individuelle Exkursionen zur Verfügung zu stellen. Für einen rentablen Betrieb soll die Nutzung für den Nutzer möglichst zuverlässig und einfach sowie die zu entrichtende Gebühr bedarfsabhängig sein, ein Missbrauch jedoch verhindert werden. Weitere Nutzungsmöglichkeiten bestehen bei mobilen Objekten anderer Art, wie Transportbehälter.

Der Erfindung liegt die Aufgabe zugrunde, bei einem Objektsicherungssystem eine sichere Aufbewahrung der Objekte und eine einfache und sichere Protokollierung und ggf. Abrechnung der Nutzung zu gewährleisten.

Diese Aufgabe wird bei einem Objektsicherungssystem nach den Oberbegriffen der nebengeordneten Ansprüche 1 und 2 durch die Merkmale der jeweiligen Ansprüche gelöst.

Weiterbildungen und vorteilhafte Ausgestaltungen ergeben sich aus den Unteransprüchen.

Bei der Lösung nach Anspruch 1 oder 2 lässt sich ein Objekt mittels einer Kombination aus einem mit einem Steckteil versehenen flexiblen Fixierrüssel und einem das Steckteil aufnehmenden Schloss sowie eines optionalen Andockmittels an einer Station andocken. Gleichzeitig wird es registriert und identifiziert. Das Objekt kann von Unberechtigten nicht entfernt oder benutzt werden, während Berechtigte mittels eines Nutzer-Identdatenträgers und/oder Eingabe eines Berechtigungscodes das Schloss durch eine Freigabevorrichtung öffnen und ein ihnen zugewiesenes Objekt nutzen können.

Im angedockten Zustand kann ein Registrierdaten enthaltendes Detektierplättchen von einem Lesegerät gelesen werden. Die erfassten Registrierdaten können sofort oder zu einem späteren Zeitpunkt allein oder in Verbindung mit Daten der Station, des Nutzers und Zeiten der Nutzung zur Station, zu einem Nutzer-Kommunikationsterminal oder zu einer Zentrale übermittelt werden. Dadurch ist eine exakte Protokollierung und zeitabhängige Abrechnung der Nutzung möglich.

Die nebengeordneten Ansprüche 1 und 2 unterscheiden sich lediglich dadurch, dass einmal das Detektierplättchen am Schloss oder in der Nähe des Schlosses oder am Andockmittel oder in der Nähe des Andockmittels und das Lesegerät oder eine Antenne des Lesegeräts am Fixierrüssel angeordnet ist und ein anderes Mal die Anordnung vertauscht ist.

Gemäß einer Weiterbildung kann das Detektierplättchen im Steckteil des Fixierrüssels und das Lesegerät oder Schreib-Lesegerät oder eine Leseantenne des Lesegeräts oder Schreib-Leseantenne des Schreib-Lesegeräts im Schloss in axialer Flucht oder koaxial zum eingesteckten Steckteil angeordnet sein. Alternativ können auch das Lesegerät oder Schreib-Lesegerät oder eine Leseantenne des Lesegeräts oder Schreib-Leseantenne des Schreib-Lesegeräts im Steckteil des Fixierrüssels und das Detektierplättchen im Schloss in axialer Flucht oder koaxial zum eingesteckten Steckteil angeordnet sein.

Die im Steckteil angeordnete Datenübertragungskomponente ist so besonders gut gegen Beschädigung, sei es durch Gebrauch oder Vandalismus, geschützt und gelangt bei Einstecken in das Schloss oder Andockmittel in unmittelbare Nähe der im Schloss oder Andockmittel angeordneten Datenübertragungskomponente. Dadurch ist eine sichere, störungsfreie Datenübertragung auch bei geringen Sendeleistungen gewährleistet.

Gemäß einer anderen Weiterbildung kann das Detektierplättchen auf einer Manschette des Fixierrüssels oder dessen Steckteils an oder nahe der Verbindungsstelle zwischen Fixierrüssel und Steckteil und das Lesegerät oder Schreib-Lesegerät oder eine Leseantenne des Lesegeräts oder Schreib-Leseantenne des Schreib-Lesegeräts am Schloss nahe der Position der Manschette bei eingesteckten Steckteil angeordnet sein. Alternativ kann auch das Lesegerät oder Schreib-Lesegerät oder eine Leseantenne des Lesegeräts oder Schreib-Leseantenne des Schreib-Lesegeräts auf einer Manschette des Fixierrüssels oder dessen Steckteils an oder nahe der Verbindungsstelle zwischen Fixierrüssel und Steckteil und das Detektierplättchen am Schloss nahe der Position der Manschette bei eingesteckten Steckteil angeordnet sein.

Dadurch ist es möglich als Fixierrüssel den flexiblen Bestandteil eines handelsüblichen Ketten- oder Seilschlosses ohne Veränderung und Schwächung dessen Steckteils einzusetzen. Vielmehr kann die dem Fixierrüssel zugeordnete Datenübertragungskomponente nachträglich am Fixierrüssel angebracht werden.

Der Fixierrüssel kann an der Station und das Schloss am Objekt angeordnet sein, wobei das Andockmittel durch das Schloss selbst gebildet ist.

Durch die Anordnung des Fixierrüssels an der Station kann der Fixierrüssel besonders lang und gegen Vandalismus stabil ausgebildet sein, ohne das Gewicht und die Handhabung des Objekts nach Abdocken zu beeinträchtigen.

Bei einer anderen Ausführung können der Fixierrüssel und das Schloss am Objekt und das Andockmittel an der Station angeordnet sein, wobei das Andockmittel durch eine vom Fixierrüssel durchgriffene Hülse gebildet ist.

Durch die Anordnung des Fixierrüssels am Objekt kann mit demselben Fixierrüssel das Objekt sowohl an der Station angedockt als auch an einem anderen umschlingbaren, feststehenden Gegenstand vorübergehend befestigt werden. Das Andockmittel der Station kann als offene, durchsteckbare Hülse ausgeführt sein. Diese weist im einfachsten Fall keine bewegliche Mechanik, die verschleißen oder durch Witterungseinflüsse störanfällig werden könnte.

Bei einer weiteren Ausführung kann der Fixierrüssel am Objekt und das Schloss an der Station angeordnet sind, wobei das Andockmittel durch das Schloss selbst gebildet ist.

Auch durch diese Anordnung des Fixierrüssels am Objekt kann mit demselben Fixierrüssel das Objekt sowohl an der Station angedockt als auch an einem anderen umschlingbaren, feststehenden Gegenstand vorübergehend befestigt werden.

Schließlich können der Fixierrüssel und das Schloss an der Station und das Andockmittel am Objekt angeordnet sein, wobei das Andockmittel durch eine vom Fixierrüssel durchgriffene Hülse gebildet ist.

Bei dieser Ausführung verbleibt der Fixierrüssel an der Station. Die Hülse am Objekt kann im einfachsten Fall ohne bewegliche Mechanik auskommen, die verschleißen oder durch Witterungseinflüsse störanfällig werden könnte. Zudem kann die Hülse als kleines, leichtes Zusatzteil ausgeführt sein, das die bestimmungsgemäße Handhabung des Objekts praktisch nicht beeinträchtigt.

In der Hülse des Andockmittels können wenigstens ein mit einem Nutzer-Kommunikationsterminal oder einer Zentrale verbundenes Schreibgerät oder wenigstens eine Schreibantenne des Schreibgeräts oder wenigstens ein Lesegerät oder wenigstens eine Leseantenne des Lesegeräts oder wenigstens ein Schreib-Lesegerät oder wenigstens eine Schreib-Leseantenne des Schreib-Lesegeräts angeordnet sein, wobei das Schreibgerät oder Lesegerät oder Schreib-Lesegerät bei durchgestecktem Fixierrüssel durch eine Koppelvorrichtung mit dem Steuergerät aus der Menge Steuer-, Identifikations- und Registrierungsschaltung gekoppelt ist.

Nach Durchstecken des Fixierrüssels durch die Hülse befindet sich eine Koppelvorrichtung im Feld eines Lesegeräts oder wenigstens einer Leseantenne des Lesegeräts oder Schreibgeräts oder wenigstens einer Schreibantenne des Schreibgeräts oder eines Schreib-Lesegeräts oder wenigstens eine Schreib-Leseantenne des Schreib-Lesegeräts. Über diese Koppelvorrichtung werden alle relevanten Daten von und zum Steuergerät aus der Menge Steuer-, Identifikations- und Registrierungsschaltung übertragen.

In der Hülse des Andockmittels können nebeneinander drei Schreibgeräte oder Schreibantennen der Schreibgeräte oder drei Lesegeräte oder Leseantennen der Lesegeräte oder drei Schreib-Lesegeräte oder Schreib-Leseantennen der Schreib-Lesegeräte angeordnet sein.

Durch drei nebeneinander angeordnete Schreibgeräte oder Schreibantennen der Schreibgeräte oder drei Lesegeräte oder Leseantennen der Lesegeräte oder drei Schreib-Lesegeräte oder Schreib-Leseantennen der Schreib-Lesegeräte kann zuverlässig erkannt und unterschieden werden, ob der Fixierrüssel vor Einrasten in das Schloss vollständig durch die Hülse hindurchgesteckt oder zwar hindurchgesteckt aber anschließend zurückgezogen wurde oder nur kurz eingetaucht und anschließend zurückgezogen wurde, um ein Durchgreifen der Hülse bis zur Fixierung im Schloss zu Manipulationszwecken nur vorzutäuschen.

Dabei wird die Reihenfolge der durchgriffenen Schreibgeräte oder Schreibantennen der Schreibgeräte oder Lesegeräte oder Leseantennen der Lesegeräte oder Schreib-Lesegeräte oder Schreib-Leseantennen der Schreib-Lesegeräte ausgewertet. Nur wenn einmalig eine Reihenfolge 1, 2, 3 oder 3, 2, 1 eingehalten wurde, ist das Kriterium des einmaligen Durchsteckens erfüllt. Anderenfalls wird von einer Manipulation ausgegangen.

Das mittlere Schreibgerät oder die mittlere Schreibantenne des Schreibgeräts oder das mittlere Lesegerät oder die mittlere Leseantenne des Lesegeräts oder das mittlere Schreib-Lesegerät oder die mittlere Schreib-Leseantenne des Schreib-Lesegeräts in der Hülse kann nach außen abgeschirmt sein.

Dadurch kann ein wirksamer Datenaustausch zwischen dem Detektierplättchen in oder auf dem Rüssel und dem Schreibgerät, Lesegerät, oder Schreib-Lesegerät oder deren Antennen in der Hülse nur bei Durchstecken des Rüssels durch die Hülse erfolgen, nicht aber, wenn der Rüssel an der Hülse lediglich außen entlang geführt wird.

In der Hülse des Andockmittels kann wenigstens ein Detektierplättchen angeordnet sein, das bei Durchstecken des Fixierrüssels mit dem Steuergerät aus der Menge Steuer-, Identifikations- und Registrierungsschaltung vorübergehend oder bei durchgestecktem Fixierrüssel durch eine Koppelvorrichtung gekoppelt ist.

Analog zur Variante mit dem Schreibgerät, Lesegerät, oder Schreib-Lesegerät oder deren Antennen in der Hülse und dem Detektierplättchen in oder an dem Fixierrüssel gelangt bei einer weiteren Ausführung beim Durchstecken des Fixierrüssels durch die Hülse das Feld eines im Steckteil oder einer Manschette angebrachten Schreibgeräts, Lesegeräts, oder Schreib-Lesegeräts oder deren Antennen in den Aktivierungsbereich eines in der Hülse angeordneten Detektierplättchens. Bei dieser Aktion werden alle relevanten Daten übertragen und können zum gekoppelten Steuergerät aus der Menge Steuer-, Identifikations- und Registrierungsschaltung weitergeleitet werden.

In der Hülse des Andockmittels können nebeneinander drei Detektierplättchen angeordnet sein.

Weiter analog zur Variante mit dem Schreibgerät, Lesegerät, oder Schreib-Lesegerät oder deren Antennen in der Hülse und dem Detektierplättchen in oder an dem Fixierrüssel kann durch drei nebeneinander angeordnete Detektierplättchen zuverlässig erkannt und unterschieden werden, ob der Fixierrüssel vor Einrasten in das Schloss vollständig durch die Hülse hindurchgesteckt oder zwar hindurchgesteckt aber anschließend zurückgezogen wurde oder nur kurz eingetaucht und anschließend zurückgezogen wurde, um ein Durchgreifen der Hülse bis zur Fixierung im Schloss zu Manipulationszwecken nur vorzutäuschen. Die Auswertung erfolgt analog über die Reihenfolge der durchgriffenen Detektierplättchen. Nur wenn einmalig eine Reihenfolge 1, 2, 3 oder 3, 2, 1 eingehalten wurde, ist das Kriterium des einmaligen Durchsteckens erfüllt. Anderenfalls wird von einer Manipulation ausgegangen.

Das mittlere Detektierplättchen in der Hülse kann nach außen abgeschirmt sein.

Ebenfalls analog zur Variante mit dem Schreibgerät, Lesegerät, oder Schreib-Lesegerät oder deren Antennen in der Hülse und den Detektierplättchen in oder an dem Fixierrüssel kann ein wirksamer Datenaustausch zwischen den Detektierplättchen und dem Schreibgerät, Lesegerät, oder Schreib-Lesegerät oder deren Antennen nur bei Durchstecken des Rüssels durch die Hülse erfolgen, nicht aber, wenn der Rüssel an der Hülse lediglich außen entlang geführt wird.

In der Hülse kann eine Durchstecksperre angeordnet sein, die nur durch eine Berechtigungsabfrage vorübergehend lösbar ist.

Dadurch wird verhindert, dass ein Nutzer den Fixierrüssel eines Objekts in die falsche Hülse einführt oder zu Sabotagezwecken ein konventionelles Fahrradschloss an der Hülse befestigt wird.

Sofern zwischen dem Schreibgerät, Lesegerät, oder Schreib-Lesegerät oder deren Antennen einerseits und dem Steuergerät aus der Menge Steuer-, Identifikations- und Registrierungsschaltung eine Koppelvorrichtung vorhanden ist, kann die Koppelvorrichtung an dem, auf dem oder in dem Fixierrüssel angeordnet und als galvanische oder induktive oder kapazitive Kopplung ausgebildet sein.

Mittels dieser Koppelvorrichtung kann eine Kopplung zwischen dem Schreibgerät, Lesegerät, oder Schreib-Lesegerät oder deren Antennen einerseits und dem Steuergerät aus der Menge Steuer-, Identifikations- und Registrierungsschaltung andererseits auch dann erfolgen, wenn das Schreibgerät, Lesegerät, oder Schreib-Lesegerät oder deren Antennen mit dem Steuergerät nicht über kurze Abstände gekoppelt sind, sondern eine Kopplung nur über den Fixierrüssel hergestellt wird.

Gemäß einer Weiterbildung kann zwischen dem Steuergerät aus der Menge Steuer-, Identifikations- und Registrierungsschaltung und einem Nutzer-Kommunikationsterminal oder zwischen dem Steuergerät aus der Menge Steuer-, Identifikations- und Registrierungsschaltung und einer Zentrale oder zwischen dem Steuergerät aus der Menge Steuer-, Identifikations- und Registrierungsschaltung und der Zentrale unter Zwischenschaltung des Nutzer-Kommunikationsterminals als Relaisstation ein mono- oder bidirektionaler Datenübertragungsweg angeordnet sein.

Dadurch ist es möglich, die Identifikations- und Registrierungsdaten unverzüglich mit zentral verwalteten Berechtigungs- und Nutzungsdaten zusammenzuführen, zu vergleichen oder zu steuern, wobei auf Speicherkapazität oder eigene Intelligenz des Steuergeräts verzichtet werden kann.

Der Datenübertragungsweg kann ein Medium oder eine Kombination von Medien aus der Menge Drahtleitung, Glasfaserleitung, Funk oder körperlicher, von einem Lesegerät oder Schreibgerät oder Schreib-Lesegerät zu einem Lesegerät oder Schreib-Lesegerät zu transportierendem Datenträger umfassen.

Dadurch wird abhängig von der vorhandenen Infrastruktur in allen möglichen Fällen ein Datenaustausch gewährleistet.

Bei dem Medium Funk besteht darüber hinaus die Möglichkeit einer Fernabfrage oder Fernmitteilung des Objekts. Das Objekt muss nicht zwingend unmittelbar an einer Station angedockt sein. Es reicht vielmehr aus, es in der Funkreichweite der Station abzustellen, entweder angeschlossen an einem stationären Außenmöbel, eingezäunt freistehend oder auch völlig freistehend.

Wenn auf eine mechanische Fixierung des Objekts verzichtet wird, kann durch eine kontinuierliche oder wiederholte Abfrage der Registrierdaten des Detektierplättchens auch das Vorhandensein des Objekts in der Nähe des Empfangsgerätes oder Sende-/Empfangsgerätes der Station überprüft werden.

Der Datenübertragungsweg kann eine Verschlüsselungsvorrichtung umfassen.

Dadurch wird ein unbefugtes Mitlesen der Daten während der Übertragung wesentlich erschwert.

Ferner können die Daten auf dem Detektierplättchen verschlüsselt gespeichert sein.

Dadurch wird ein unbefugtes Auslesen der Daten wesentlich erschwert.

Die Freigabevorrichtung kann einen elektromechanischen Antrieb umfassen, der einen Riegel in eine Entriegelungsposition überführt.

Bei dieser Ausführung kann der Riegel selbsttätig entriegelt werden, so dass der Nutzer nur noch den Fixierrüssel aus dem Schloss herausziehen muss.

Die Freigabevorrichtung kann alternativ einen manuell zu betätigen Antrieb umfassen, der mit dem Riegel über eine elektrisch oder elektromagnetisch aktivierbare Kupplung gekoppelt ist und einen Riegel in eine Entriegelungsposition überführt.

Bei dieser Ausführung wird für die Betätigung der Kupplung lediglich eine geringe elektrische Energie eingesetzt, während die wesentlich höhere Energie zur Betätigung des Riegels selbst manuell vom Nutzer aufgebracht wird. Dadurch kann bei Einsatz einer Batterie oder eines Akkus als Energiequelle eine lange Laufzeit für zahlreiche Betätigungsvorgänge der Kupplung erzielt werden.

Die Freigabevorrichtung kann eine im Schloss angeordnete Feder umfassen, die durch das eingesteckte Steckteil zusammengedrückt wird und nach Überführen des Riegels in die Entriegelungspositon entspannt und das Steckteil automatisch aus dem Schloss drückt.

Durch diese Feder wird die Handhabung beim Öffnen des Schlosses erleichtert, da der Nutzer keine freie Hand zum Ergreifen und herausziehen des Fixierrüssels benötigt.

Das Schloss oder das Andockmittel können eine Verriegelungserkennung umfassen.

Hierdurch lässt sich erfassen, ob und wann ein Objekt in eine Station zurückgegeben und gleichzeitig so angedockt und verriegelt wurde, dass eine sichere Datenübertragung ermöglicht und ein Missbrauch durch Unberechtigte, wie ein anschließendes Lösen des Objekts von der Station verhindert wird.

Weiterhin kann die Verriegelungserkennungsvorrichtung eine logische UND-Verknüpfungsauswertungsschaltung oder - programmroutine aus Lesbarkeit des Detektierplättchens durch das Lesegerät einerseits und mechanischer Position eines Riegels in einer Verriegelungsstellung oder mechanischer Position des Steckteils im Schloss andererseits umfassen.

Diese Weiterbildung ermöglicht eine verbesserte Verriegelungserkennung, da geprüft wird, ob wirklich das Steckteil des Fixierrüssels in das Schloss gesteckt wurde oder eine baugleiche Attrappe.

Ferner kann in Verbindung mit dem Medium Funk festgestellt werden, ob ein Nutzer das Objekt zur Rückgabe und Beendigung der Nutzung in der Nähe eines Empfangsgerätes einer Station abgestellt hat oder sich dort nur zufällig vorübergehend aufhält.

Die Freigabevorrichtung kann ein zusätzliches Lesegerät oder Schreib-Lesegerät für Nutzer-Identdatenträger sowie eine Auswertevorrichtung für Identdaten umfasst und durch die Auswertevorrichtung bei übereinstimmenden Identdaten ein Freigabesignal oder abwechselnd ein Freigabesignal und Sperrsignal generieren.

Der Nutzer kann so mit einem Nutzer-Identdatenträger am Schloss selbst berührungslos die Freigabevorrichtung entsperren oder wechselweise entsperren und sperren. Dadurch entfällt ein bei manchen bekannten Objektsicherungssystemen zeitraubender Anruf bei einer Zentrale oder die gesonderte Bedienung eines Nutzer-Kommunikationsterminals.

Mittels des Nutzer-Identdatenträgers und der Auswertevorrichtung kann der elektromechanische Antrieb aktivierbar sein, der einen Riegel in eine Entriegelungsposition überführt.

Dadurch wird dem Nutzer die Benutzung weiter vereinfacht, indem in einem Arbeitsgang auch der Riegel betätigt wird.

Mittels des Nutzer-Identdatenträgers und der Auswertevorrichtung kann die Kupplung aktivierbar sein, die den manuell zu betätigen Antrieb mit dem Riegel koppelt.

Auch bei dieser Ausführung wird dem Nutzer die Benutzung weiter vereinfacht, indem in einem Arbeitsgang auch die Kupplung aktiviert wird, so dass der Nutzer sofort durch Betätigen des manuellen Antriebs den Riegel betätigen kann.

Die elektrischen oder elektronischen Komponenten der Station oder des Objekts können über eine Zeitschaltvorrichtung vorübergehend durch eine Batterie oder einen Akku gespeist sein, und die Zeitschaltvorrichtung durch eine Schaltstellung des manuell zu betätigenden Antriebs einschaltbar sein.

Durch diese Merkmale wird erreicht, dass die elektrischen oder elektronischen Komponenten der Station oder des Objekts nur bei Bedarf eingeschaltet und nach Ablauf einer Verzögerungszeit automatisch wieder ausgeschaltet werden. Auf diese Weise wird der Akku oder die Batterie in der übrigen Zeit geschont und die Akku- oder Batterielaufzeit wesentlich verlängert. Auslöser für das Einschalten ist eine Schaltstellung des manuell zu betätigenden Antriebs.

Die elektrischen oder elektronischen Komponenten der Station oder des Objekts können über eine Zeitschaltvorrichtung vorübergehend durch eine Batterie oder einen Akku gespeist sein, und die Zeitschaltvorrichtung bei Einstecken des Steckteils des Rüssels in das Schloss durch einen Schaltkontakt oder durch die Verriegelungserkennungsvorrichtung einschaltbar sein.

Analog wird durch diese Merkmale erreicht, dass die elektrischen oder elektronischen Komponenten der Station oder des Objekts nur bei Bedarf eingeschaltet und nach Ablauf einer Verzögerungszeit automatisch wieder ausgeschaltet werden. Auf diese Weise wird der Akku oder die Batterie in der übrigen Zeit geschont und die Akku- oder Batterielaufzeit wesentlich verlängert. Auslöser ist hier jedoch das Einstecken des Steckteils des Rüssels in das Schloss.

Ein von einem Schreibgerät oder Lesegerät oder Schreib-Lesegerät eines Nutzer-Kommunikationsterminals oder einer Zentrale zu einem Schreibgerät oder Lesegerät oder Schreib-Lesegerät einer Steuer-, Identifikations- und Registrierungsschaltung oder Freigabevorrichtung oder in umgekehrter Richtung zu transportierende Datenträger kann als Registrierungs-und Zustandsdatenträger mit dem Nutzer-Identdatenträger kombiniert sein.

Identdaten sind die Objektnummer, Nutzer-Identnummer, gegebenenfalls verknüpft mit einem Verfügungdatum sowie Identnummer des Detektierplättchen.

Registrierdaten sind, z. B. auf eine Fahrradverleihstation bezogen, Stationsnummer, Entleihort, Rückgabeort, Entleihdauerdauer.

Zustandsdaten sind z. B. die gefahrenen Kilometer, die Rückschlüsse auf allgemeine Abnutzung erlauben, sowie Funktionen der Registrierungskomponenten oder auch der Beleuchtungsanlage und des Reifendrucks, sofern entsprechende Sensoren vorhanden sind.

Für den Fall, dass keine drahtgebundene oder drahtlose Verbindung zwischen einem Nutzer-Kommunikationsterminals oder einer Zentrale und einer Steuer-, Identifikations- und Registrierungsschaltung oder Freigabevorrichtung besteht, kann ein mobiler Datenträger als Registrier- und Zustandsdatenträger beschrieben und gelesen und anstelle einer drahtgebundenen oder drahtlosen Verbindung körperlich transportiert werden. Wenn dieser Datenträger gleichzeitig Nutzer-Identdaten enthält, kann der Nutzer mit einem einzigen, mehrere Datenarten kombiniert speichernden Datenträger auskommen.

Am Objekt oder an der Station kann zusätzlich ein das Steckteil aufnehmendes und verriegelndes, durch eine elektromechanische Freigabevorrichtung oder einen manuell zu betätigenden Schlüssel oder Betätigungsstift öffenbares Schloss angeordnet sein.

Dadurch hängt das Steckteil des nicht zum Andocken benutzten Fixierrüssels nicht frei herum, sondern wird gegen Witterungseinflüsse, Vandalismus und Manipulationen geschützt fixiert.

Der Fixierrüssel kann zusätzlich als temporäre Objektfixiervorrichtung ausgebildet sein, wobei das am Objekt angeordnete Schloss einen Schlüssel umfasst, der bei nicht im objektseitigen Schloss eingestecktem Steckteil des Fixierrüssels gegen Herausziehen blockiert ist und bei eingestecktem Steckteil des Fixierrüssels unblockiert, aber gegen Herausfallen fixiert, jedoch manuell entfernbar ist.

Bei dieser Ausführung kann derselbe Fixierrüssel außer zum Andocken an einer Station auch zur Fixierung an einem anderen Gegenstand verwendet werden. Wenn es sich bei dem Objekt um ein Fahrrad handelt, erfüllt der Fixierrüssel mit dem Schloss die Funktion eines Fahrradschlosses. Damit der für diesen Anwendungszweck zu benutzende Schlüssel am Objekt vorrätig ist, aber nicht von Unbefugten entfernt werden kann, ist er bei nicht im objektseitigen Schloss eingestecktem Steckteil des Fixierrüssels gegen Herausziehen blockiert.

Wenn das Steckteil in das Schloss eingesteckt wird, sind zwei Fälle zu unterscheiden. Einmal kann das Steckteil in das Schloss lediglich zur Aufbewahrung während der Benutzung eingesteckt sein. Ein anderes Mal kann das Steckteil in das Schloss zum Anschließen des Objektes an einem festen Gegenstand, wie Bügeln, Geländern oder Masten, eingesteckt sein. In beiden Fällen könnte der Schlüssel entnommen werden. Während beim Anschließen der Schlüssel entnommen wird, kann er bei Benutzung im Schloss verbleiben. Zur Sicherheit ist der unblockierte Schlüssel jedoch fixiert, so dass er nicht durch Erschütterungen herausfallen kann.

Der Schlüssel kann bei nicht im objektseitigen Schloss eingestecktem Steckteil des Fixierrüssels zusätzlich in einem Gehäuse versenkt sein.

Neben einer optischen Erkennung der Blockade wird so auch verhindert, dass Unbefugte den Schlüssel mittels eines Werkzeugs ergreifen und gewaltsam entfernen können.

Ein Nutzer-Kommunikationsterminal kann eine Anzeigevorrichtung, eine Lese- und/oder Eingabevorrichtung aus der Menge Nutzerdatenträger, Spracheingaben oder manuelle Tastatureingaben, sowie einen Datenspeicher umfassen.

Mittels dieser Komponenten können einem Nutzer vor Ort an oder nahe einer Station alle Hinweise über Nutzervertrag, Vertragsbedingungen, Kosten sowie Bedienung des Objektsicherungssystems gegeben werden. Optional kann auch ein Sprechkontakt zu Zentrale hergestellt werden. Im Speicher können ferner Registrier- und Zustandsdaten der Objekte gespeichert oder zwischengespeichert werden sowie auch Vergleichsdaten zur Nutzeridentität. Im Falle einer Übermittlung an eine Zentrale lassen sich Nutzerdaten für eine Abrechnung zentral auswerten sowie Objektbestände an einer Station erfassen und für eine logistische Zuordnung eines Überschusses oder Minderbestandes nutzen.

Das Nutzer-Kommunikationsterminal kann zusätzlich eine Ausgabe- und Rücknahmevorrichtung für Nutzer-Identdatenträger oder kombinierte Registrier-, Zustands- und Nutzer-Identdatenträger umfassen.

Dadurch kann der Nutzer den Datenträger vor Ort in der Nähe einer Station erhalten sowie auch zurückgeben und spart sonst erforderliche Wege zur Zentrale.

Die Ausgabe- und Rücknahmevorrichtung kann ein Schreiblesegerät für Nutzer-Identdatenträger oder kombinierte Registrier-, Zustands- und Nutzer-Identdatenträger sowie eine autarke Verrechnungsvorrichtung oder einen Datenübertragungsweg zu einer Verrechnungsvorrichtung einer Zentrale umfassen.

Diese Merkmale ermöglichen es, Blankodatenträger im Nutzer-Kommunikationsterminal vorzuhalten, die dann individuell nach Nutzer, Datum, Entnahmedauer und Objekt beschrieben werden und nach Rücknahme gelesen werden können. Auf Basis der geschriebenen und gelesenen Daten können anschließend auch angefallenen Nutzungsentgelte verrechnet werden.

Die Daten auf dem Nutzer-Identdatenträger oder dem Registrierungs-, Zustands- und Nutzer-Identdatenträger sind vorzugsweise verschlüsselt gespeichert.

Dadurch wird ein unbefugtes Auslesen oder Ändern der Daten wesentlich erschwert.

Das Nutzer-Kommunikationsterminal kann zusätzlich ein Lesegerät oder Schreiblesegerät für bargeldlose Zahlungsmedien umfassen.

Zusätzlich oder alternativ kann das Nutzer-Kommunikationsterminal zusätzlich ein Eingabe- und Wechselgerät für Bargeld umfassen.

Beide Ausstattungen erleichtern dem Nutzer den Zahlungsverkehr für Nutzungsentgelte und ermöglichen auch das spontane Entleihen von Objekten.

Die Station oder das Nutzer-Kommunikationsterminal oder die Station und das Nutzer-Kommunikationsterminal können eine netzunabhängige, vorzugsweise solare und/oder windgetriebene, akkugestützte Stromversorgung aufweisen.

Dadurch ist eine auf Nutzerinteressen gerichtete und von der Stromversorgungsinfrastruktur unabhängige Installation möglich.

Nachfolgend wird die Erfindung anhand von Ausführungsbeispielen erläutert, die in der Zeichnung dargestellt sind. In der Zeichnung zeigen:
- Fig. 1: eine schematische Darstellung eines an einer Station angedockten Objekts,
- Fig. 2: eine Darstellung eines Andock-, Identifi- kations- und Registrierungsmittels einer Station,
- Fig. 3: einen am Objekt befestigten flexiblen Fi- xierrüssel mit einem Steckteil und einem Schloss,
- Fig. 4a: eine Detaildarstellung des Steckteils und Schlosses im offenen Zustand,
- Fig. 4b: eine Detaildarstellung des Steckteils und Schlosses im geschlossenen Zustand,
- Fig. 5: eine schematische Darstellung einer Sta- tion mit einem Objekt und einem Nutzer- Kommunikationsterminal,
- Fig. 6: eine alternative Darstellung von Andock-, Identifikations- und Registrierungsmit- teln einer Station und eines Objektes,
- Fig. 6A: eine erste Abwandlung von Andock-, Iden- tifikations- und Registrierungsmitteln einer Station und eines Objektes nach Fig. 6,
- Fig. 6B: eine zweite Abwandlung von Andock-, Iden- tifikations- und Registrierungsmitteln einer Station und eines Objektes nach Fig. 6
- Fig. 7: eine alternative Darstellung von Andock-, Identifikations- und Registrierungsmit- teln einer Station mit mehreren Objekten,
- Fig. 7a: eine Detaildarstellung einer Einzelheit aus Fig. 7 und
- Fig. 8: eine weitere alternative Darstellung von Andock-, Identifikations- und Registrie- rungsmitteln einer Station und eines Ob- jekts.

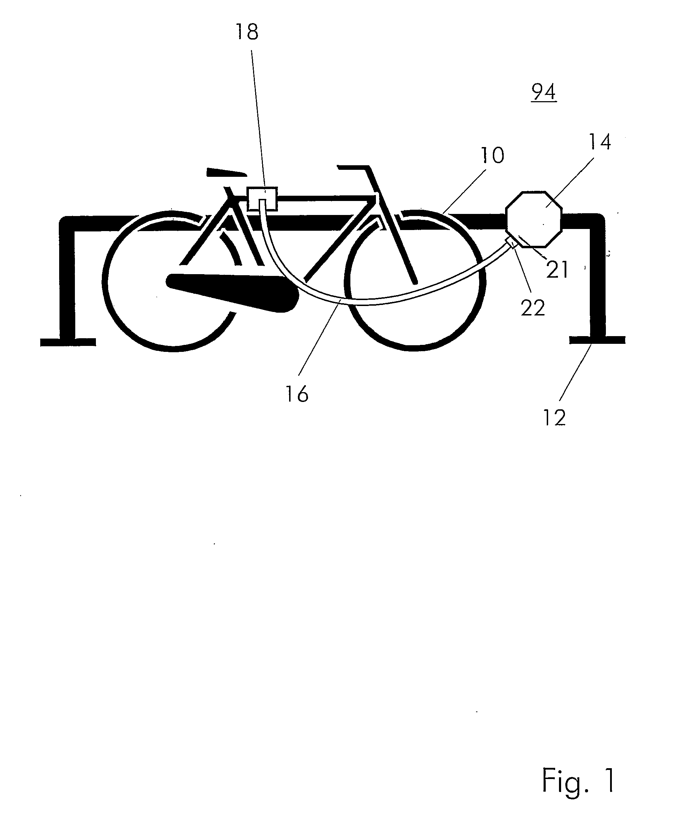

Fig. 1 zeigt eine schematische Darstellung eines an einer Station 94 angedockten Objekts 10. Im vorliegenden Fall ist das Objekt 10 ein Leihfahrrad, das an einer Leihstation angedockt ist. Dabei ist ein flexibler Fixierrüssel 16 an einem Gehäuse 18 am Leihfahrrad befestigt, wobei ein freies Ende des Fixierrüssels 16 ein verriegelbares Steckteil 22 umfasst und in einem an einem Fahrradbügel 12 befestigten Aufnahmegehäuse 14 der Station in einem Schloss 21 eingesteckt ist.

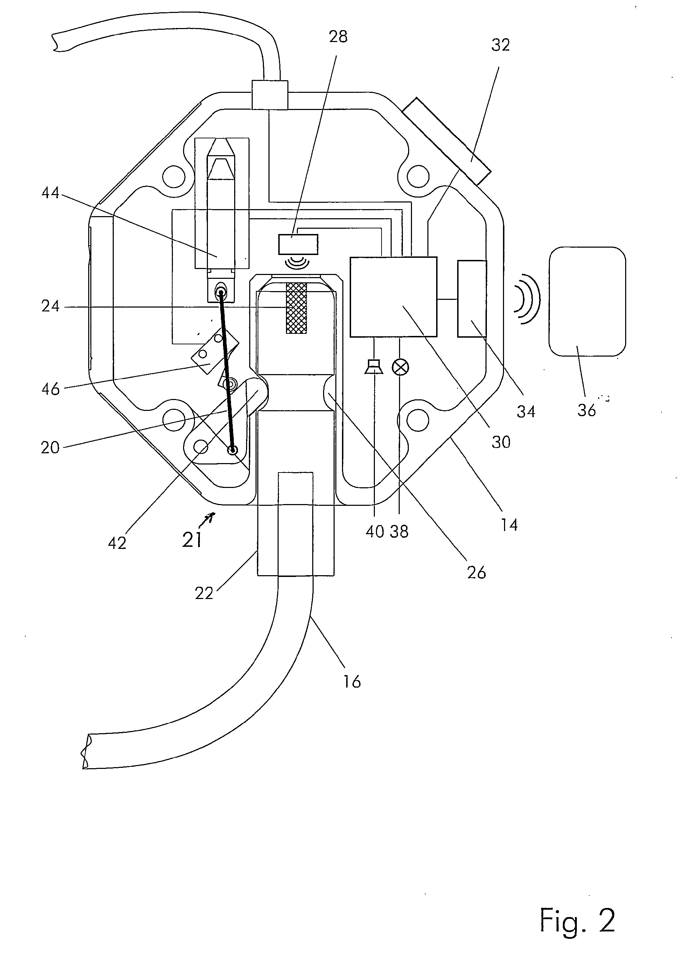

Fig. 2 zeigt eine Darstellung eines Andock-, Identifikations-und Registrierungsmittels einer Station. In einem Aufnahmegehäuse 14 befindet sich ein Schloss 21 für ein Steckteil 22 eines Fixierrüssels 16. Das Steckteil 22 weist eine Rastnut 26 sowie ein Detektierplättchen 24 auf. Das Schloss 21 umfasst einen in die Rastnut 26 des Steckteils 22 eingreifenden Riegel 42, der unter Federspannung steht und durch eine einen Elektromagneten 44 umfassende Entriegelungsvorrichtung 20 entriegelbar ist. Eine als Schalter oder Sensor ausgebildete Verriegelungserkennung 46 ermöglicht es, den Verriegelungszustand des Schlosses 21 zu erfassen.

Im Aufnahmegehäuse 14 ist ferner ein Lesegerät 28 angeordnet, das Identdaten des im Steckteil 22 angeordneten Detektierplättchens 24 liest. Mittels eines Steuergerätes 30 werden Daten des Detektierplättchens 24 erfasst und gespeichert oder zu einer Zentrale übertragen. Ferner bildet das Steuergerät 30 zusammen mit einer Tastatur 32 und/oder einem Lesegerät 34 für Nutzerdatenträger 36 sowie dem Elektromagneten 44 eine Freigabevorrichtung für das Steckteil 22 bei Berechtigung des Nutzers. Ergänzend ist noch eine Anzeigevorrichtung aus LED's 38 und einem Pieper 40 mit dem Steuergerät 30 verbunden, die verschiedene Betriebszustände signalisiert.

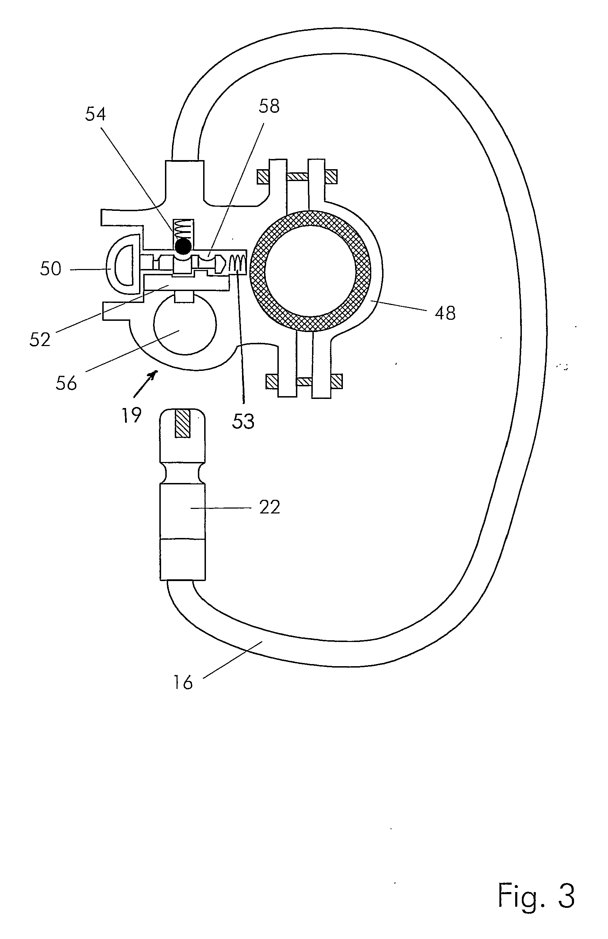

Fig. 3 zeigt einen am Objekt mittels einer Schelle 48 befestigten flexiblen Fixierrüssel 16 mit einem Steckteil 22 und einem Schloss 19. Im Schloss 19 befindet sich ein Schlüssel 50, der im nicht eingesteckten Zustand des Steckteils 22 in einer Aufnahmeöffnung 56 im Schloss 19 durch einen Riegel 52 gegen Herausziehen blockiert und gleichzeitig im Gehäuse des Schlosses 19 versenkt ist.

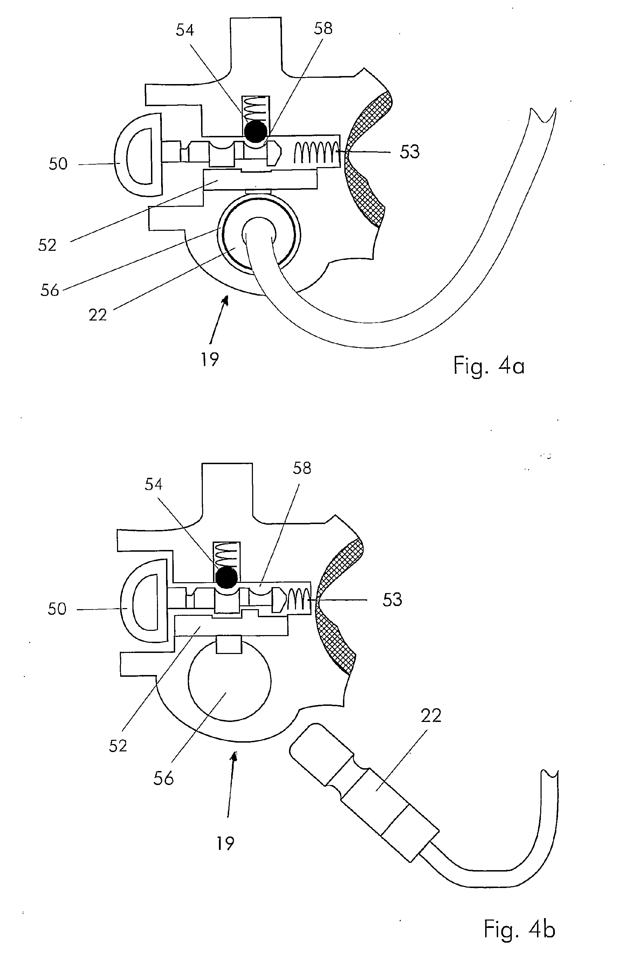

Detaildarstellungen des Steckteils 22 und Schlosses 19 zeigen Fig. 4a für den offenen Zustand und Fig. 4b für den geschlossenen Zustand. Im offenen, nicht eingesteckten Zustand des Steckteils 22 in die Aufnahmeöffnung 56 ist ein Ansatz des Schlüssels 50 durch den Riegel 52 blockiert, im geschlossenen, eingesteckten Zustand des Steckteils 22 in die Aufnahmeöffnung 56 ist der Ansatz des Schlüssels 50 nicht blockiert. Gegen den Schlüssel 50 im vollständig eingesteckten und versenkten Zustand drückt eine Feder 53. Bei Aufheben der Blockierung wird der Schlüssel 50 durch die Feder 53 soweit herausgedrückt, bis ein federbelastetes Rastelement 54 in eine Schlüsselnut 58 eingreift und den Schlüssel 50 in dieser Lage fixiert, so dass er nicht herausfallen kann. Da der Schlüssel 50 dann nicht mehr im Gehäuse des Schlosses 19 versenkt ist, kann die durch das Rastelement 54 bewirkte Fixierung manuell überwunden und der Schlüssel 50 bedarfsweise herausgezogen werden.

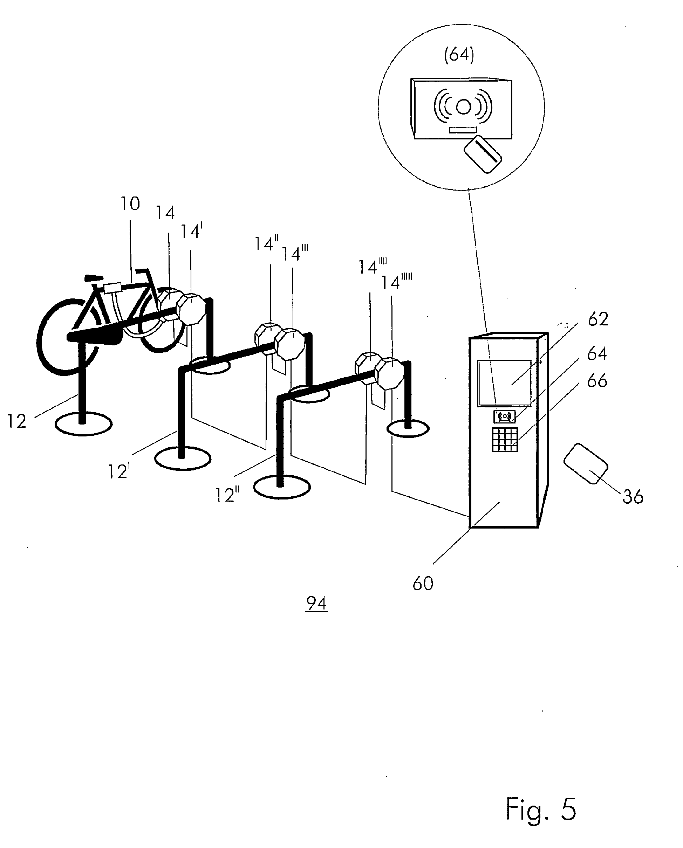

Fig. 5 zeigt eine schematische Darstellung einer Station 94 mit Andock-, Identifikations- und Registrierungsmitteln 14 ... 14''''' an Fahrradbügeln 12, 12', 12'' sowie einem gemeinsamen Nutzer-Kommunikationsterminal 60. Die Andock-, Identifikations- und Registrierungsmittel 14 ... 14'''''entsprechen der Ausführung gemäß Fig. 2. Die nicht gezeichneten internen Steuergeräte sind mit dem gemeinsamen Nutzer-Kommunikationsterminal 60 verbunden, das einen Bildschirm 62, eine Tastatur 66 sowie ein Lesegerät 64 für Nutzerdatenträger 36, wie Leihkarten oder Kreditkarten umfasst. Das Nutzer-Kommunikationsterminal 60 enthält ferner eine netzunabhängige, akkugestützte Stromversorgung sowie eine Datenübertragungsvorrichtung zu einer Zentrale über ein Mobilfunknetz, die jedoch nicht zeichnerisch dargestellt sind.

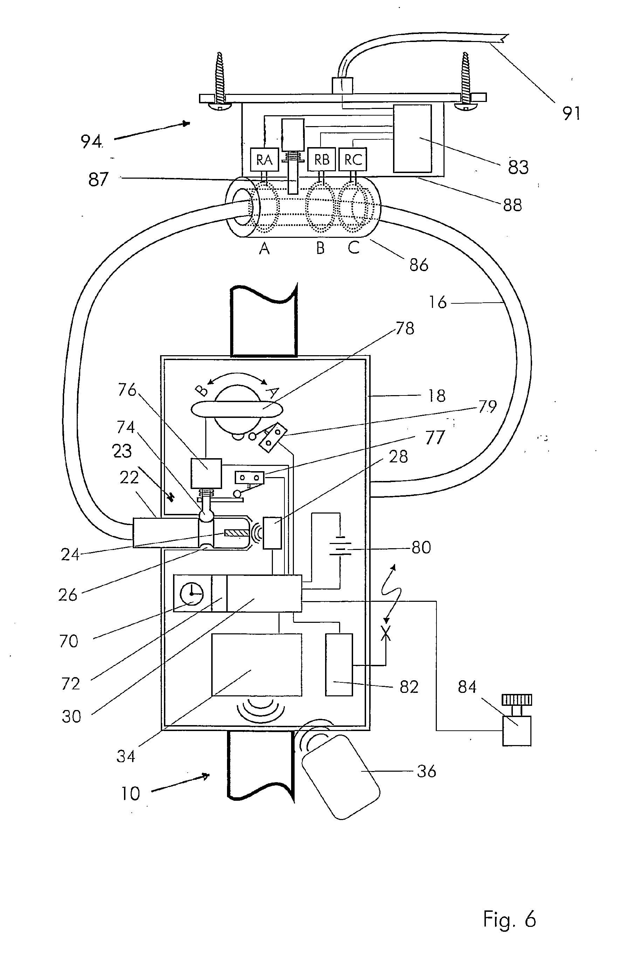

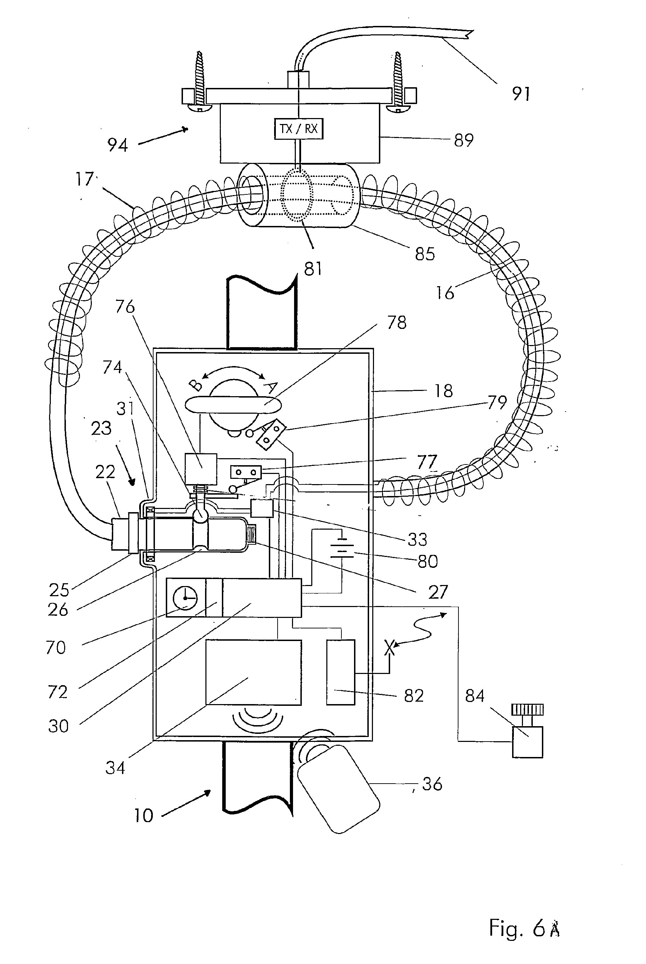

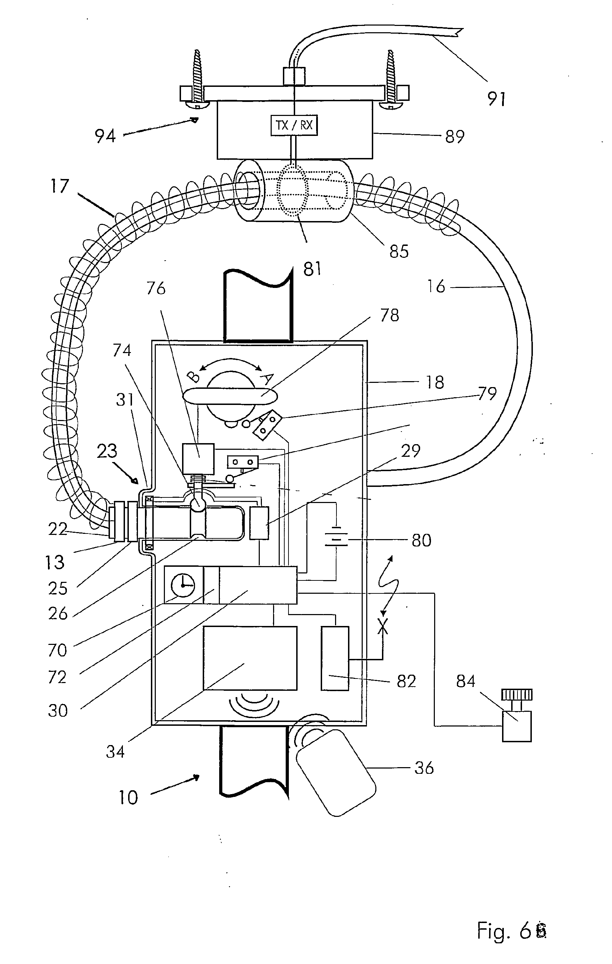

Fig. 6 zeigt eine alternative Darstellung von Andock-, Identifikations- und Registrierungsmitteln einer Station 94 und eines mobilen Objekts 10. In einem am mobilen Objekt 10 angeordneten Gehäuse 18 sind ähnlich Fig. 2 ein Schloss 23 für ein Steckteil 22 eines Fixierrüssels 16, ein Lesegerät 28 zur Verriegelungserkennung des Steckteils 22 und ein Steuergerät 30 angeordnet. Der Fixierrüssel 16 selbst ist ebenfalls am Objekt 10 bzw. am Gehäuse 18 befestigt. Das Steuergerät 30 umfasst ferner eine Uhr 70 und einen Speicher 72. Das Steckteil 22 weist eine Rastnut 26 sowie ein Detektierplättchen 24 auf. Das Schloss 23 umfasst einen in die Rastnut 26 des Steckteils 22 eingreifenden Riegel 74, der über eine zwischengeschaltete steuerbare Kupplung 76 manuell mittels eines Knebels 78 durch Schwenken in eine erste Schwenkstellung in Richtung A entriegelbar ist, sofern die steuerbare Kupplung 76 durch das Steuergerät 30 aktiviert ist. Ferner ist ein weiteres Lesegerät 34 für Nutzerdatenträger 36 mit dem Steuergerät 30 verbunden. Zur Übermittlung des Zustandes der Verriegelungserkennung an eine Zentrale oder zum Nutzerkommunikations-Terminal 60 dient ein Funkmodul 82. Zur Stromversorgung dient eine Batterie 80 oder ein Akku, der durch einen objektseitigen Dynamo 84 aufgeladen werden kann.

Zur Verlängerung der Laufzeit der Batterie 80 werden die elektrischen und elektronischen Komponenten durch das Steuergerät 30 in Verbindung mit der Uhr 70 nach Ablauf einer Verzögerungszeit ausgeschaltet. Lediglich die Uhr 70 läuft weiter, um gelesene Daten später mit der absoluten Zeit verknüpfen zu können. Durch Schwenken des Knebels 78 in eine zweite Schwenkstellung in Richtung B wird ein Schalter 79 betätigt, der über das Steuergerät 30 die Stromversorgung für die elektrischen und elektronischen Komponenten wieder einschaltet, bis nach Ablauf der Verzögerungszeit die Stromversorgung erneut unterbrochen wird.

Ein weiterer Schalter 77 wird beim Einstecken des Steckteils 22 automatisch über den Riegel 74 betätigt und dient ebenfalls zum vorübergehenden Einschalten der Stromversorgung. Außerdem lässt sich die Stellung des Schalters 77 in Verbindung mit einem Lesevorgang des Detektierplättchens 24 durch das Lesegerät 28 von der Steuerung 30 als Verriegelungserkennung auswerten.

Auf Seiten der Station 94 ist eine Hülse 86 mit drei nebeneinander angeordneten Leseantennen A, B, C von Leseempfängern RA, RB, RC eines Lesegerätes 88 vorhanden, die vom Fixierrüssel 16 durchgriffen wird. Durch die Reihenfolge des Lesens der Registrierdaten des Detektierplättchens 24 beim Durchstecken des Steckteils 22 durch die Hülse 86 wird mit einem weiteren Steuergerät 83 erfasst, das Bestandteil des Lesegerätes 88 ist. Durch Auswertung der Reihenfolge des Lesens lässt sich ermitteln, ob der Fixierrüssel 16 nach Erkennung der Verriegelung des Steckteils 22 im Schloss 23 die Hülse 86 immer noch durchgreift oder unter Umgehung der Hülse 86 eingesteckt wurde, nachdem das Steckteil 22 zuvor in umgekehrter Richtung wieder durch die Hülse gezogen 86 wurde. Die erfassten Daten werden vom Steuergerät 83 über ein Verbindungskabel 91 zu einer Zentrale oder einem Nutzer-Kommunikationsterminal weitergeleitet.

In die Hülse 86 greift ein elektromagnetisch betätigter Sperrstift 87 ein, der eine Durchstecksperre für nicht zulässige Fixierrüssel oder andere Gegenstände bildet. Wenn das Steckteil 22 eines Fixierrüssels 16 an die Hülse 86 herangeführt wird, werden die Registrierdaten des Detektierplättchens über eine der Leseantennen A oder C gelesen und mittels des Steuergeräts 83 ausgewertet und mit gespeicherten oder über das Nutzer-Kommunikationsterminal oder die Zentrale abgefragten Vergleichsdaten verglichen. Stimmen die Registrierdaten mit den Vergleichsdaten überein, wird mittels des Steuergeräts 83 der Sperrstift 87 aus der Hülse 86 herausgezogen, so dass das Steckteil 22 vollständig hindurchgesteckt werden kann. Anderenfalls verbleibt der Sperrstift 87 in der Hülse 86.

Anstelle von Leseantennen eines Lesegerätes könnten an der Hülse 86 auch Detektierplättchen angeordnet sein, wenn im Steckteil anstelle eines Detektierplättchens ein Lesegerät angeordnet wäre.

Neben einer mechanischen Befestigung des Objektes 10 mittels des Fixierrüssels 16 und einer Station 94 ist es auch möglich, das Objekt 10 mechanisch unbefestigt in einem abgeschlossenen Bereich oder gänzlich frei zugänglich aufzubewahren. Dazu müssen lediglich wiederholt der Zustand der Verriegelungserkennung sowie Registrierdaten des Detektierplättchens 24 berührungslos zu einem Nutzer-Kommunikationsterminal übermittelt werden um das Vorhandensein des Objektes 10 im Lesebereich des Nutzer-Kommunikationsterminals überwachen zu können.

Zur Entriegelung des Steckteils 22 ist zunächst durch Schwenken des Knebels 78 in Richtung B die Stromversorgung einzuschalten und ein gültiger Nutzerdatenträger 36 mit dem weiteren Lesgerät 34 zu koppeln, damit die Kupplung 76 durch das Steuergerät 30 aktiviert wird. Anschließend kann der Riegel 74 aus der Rastnut 26 des Steckteils 22 durch Schwenken des Knebels 78 in Richtung A entfernt werden.

In Fig. 6A ist eine erste Abwandlung von Andock-, Identifikations- und Registrierungsmitteln einer Station 94 und eines mobilen Objekts 10 gegenüber Fig. 6 dargestellt.

An der Stirnfläche einer das Steckteil 22 im Schloss 23 aufnehmenden Öffnung befindet sich eine Feder 27, die vom verriegelten Steckteil 22 zusammengedrückt wird und nach Entriegelung durch den Riegel 74 das Steckteil 22 selbständig aus dem Schloss 23 herausschiebt. Ein Detektierplättchen 25 ist als Manschette nahe der Verbindungsstelle zwischen dem Fixierrüssel 16 und dem Steckteil 22 auf dem Steckteil 22 angeordnet und eine Leseantenne 31 befindet sich an der Wand des Gehäuses 18 und umschließt die Öffnung im Schloss 23 für das Steckteil 22. Bei eingestecktem Steckteil 22 befindet sich das Detektierplättchen 25 im Lesefeld der Leseantenne 31. Die Leseantenne 31 ist mit einem Schreib-Lesegerät 33 verbunden und das Schreib-Lesegerät 33 wiederum mit dem Steuergerät 30.

Daten zwischen dem Steuergerät 30 und einem Nutzer-Kommunikationsterminal oder einer Zentrale werden über eine Koppelvorrichtung 17 aus einer um den Fixierrüssel 16 gewundenen Schreib-Leseantenne und einer damit gekoppelten Schreib-Leseantenne 81 in der Hülse 85 sowie damit verbundener Schreib-Lesegeräte 33; 89 zur Station 94 übertragen.

In Fig. 6B ist eine zweite Abwandlung von Andock-, Identifikations- und Registrierungsmitteln einer Station 94 und eines mobilen Objekts 10 gegenüber Fig. 6 und Fig. 6A dargestellt.

Auch hier ist wieder eine Koppelvorrichtung 17 aus einer um den Fixierrüssel 16 gewundenen Schreib-Leseantenne vorhanden. Die Schreib-Leseantenne ist jedoch nicht direkt mit einem Schreib-Lesegerät 29 verbunden, sondern geht nahe dem Steckteil 22 in einen konzentrierten Antennenabschnitt 13 über, der wiederum über die Schreib-Leseantenne 31 mit dem Schreib-Lesegerät 29 verbunden ist. Die Datenübertragung zwischen Koppelvorrichtung 17 und der Schreib-Leseantenne 31 erfolgt in dieser Ausführung berührungs- und kontaktlos.

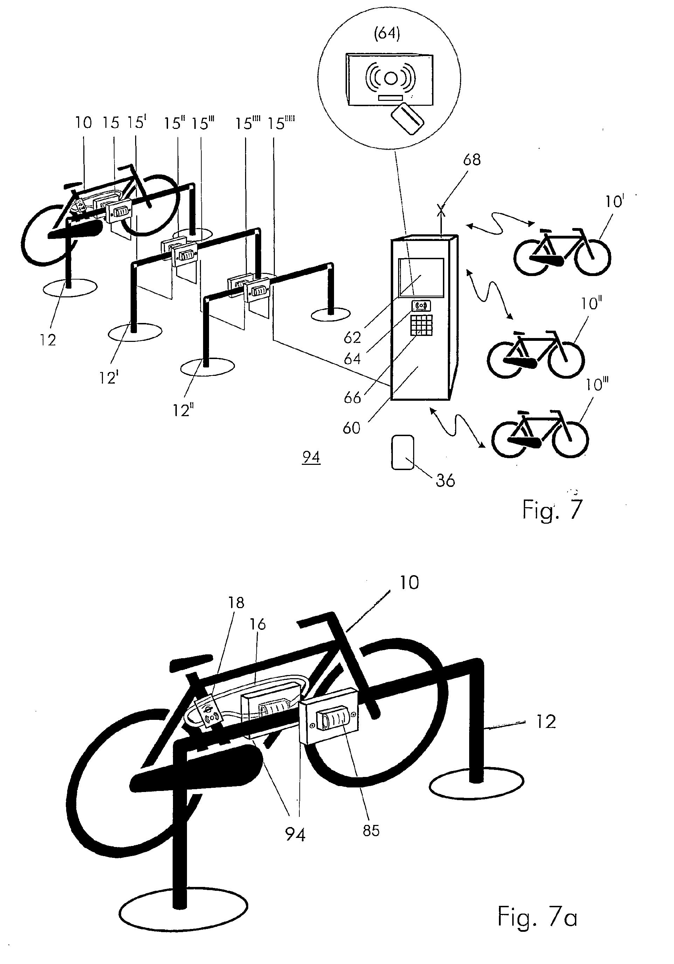

Fig. 7 zeigt eine alternative Darstellung von Andock-, Identifikations- und Registrierungsmitteln einer Station 94 und Objekten. Neben einem Objekt 10, das mechanisch an einem der Fahrradbügel 12, 12', 12'' befestigt ist und über Identifikations- und Registrierungsmittel 15, 15'; 15'',15''', 15'''', 15'''' erfasst wird, sind dort zusätzlich Objekte 10', 10'', 10''' vorhanden, die nicht mechanisch an einem der Fahrradbügel 12, 12', 12'' befestigt sind. Diese Objekte können sich in einem abgeschlossenen Bereich oder gänzlich frei zugänglich befinden. Der Zustand der Verriegelungserkennung sowie Identifikations- und Registrierdaten des jeweiligen Detektierplättchens 24 werden berührungslos über Funk zum Nutzer-Kommunikationsterminal 60 übermittelt bzw. abgefragt, wie durch eine zusätzliche Antenne 68 am Nutzer-Kommunikationsterminal 60 und Übertragungssymbole dargestellt. In diesem Fall wird nur das Vorhandensein der Objekte 10', 10'', 10''' im Empfangs- oder Funkbereich des Nutzer-Kommunikationsterminals 60 überwacht.

Fig. 7a zeigt eine Detaildarstellung einer Einzelheit aus Fig. 7, nämlich ein Fahrrad als Objekt 10 am Fahrradständer bzw. am Fahrradbügel 12. Am Fahrrad ist ein Gehäuse 18 mit den in Fig. 6A oder 6B dargestellten Komponenten und ein Fixierrüssel 16 vorhanden, der eine Hülse 85 an einer Station 94 durchgreift.

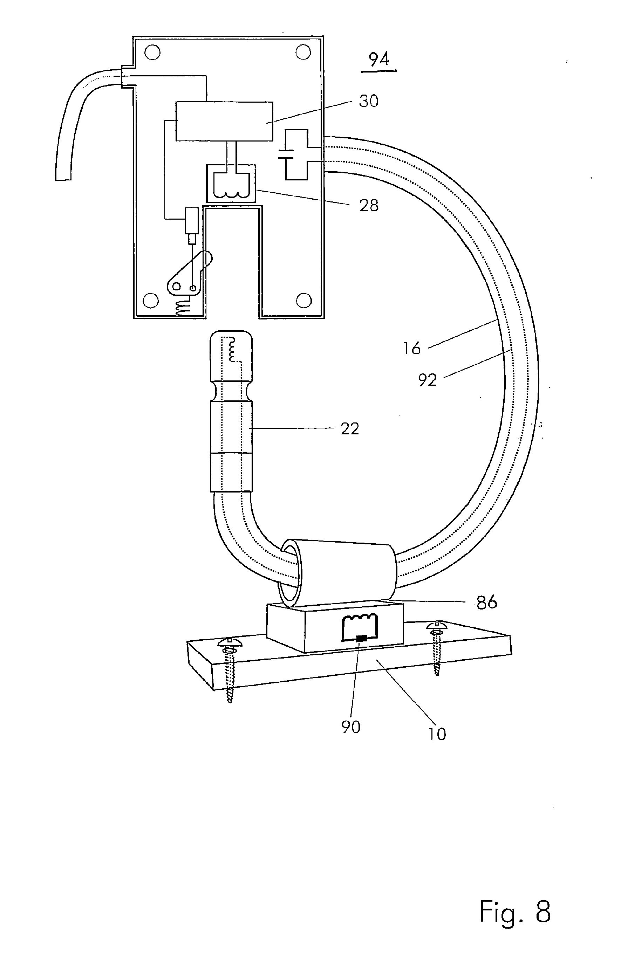

Fig. 8 zeigt eine alternative Darstellung von Andock-, Identifikations- und Registrierungsmitteln einer Station 94 und eines Objekts 10. Anders als bei den Ausführungen nach den Figuren 6, 6A, 6B, 7, 7a ist die Hülse 86 am Objekt 10 und der Fixierrüssel 16 mit dem Schloss 23 an der Station 94 angeordnet. Die vom Fixierrüssel 16 durchgriffene Hülse 86 weist nur ein Detektierplättchen 90 auf. Zum Lesen des Detektierplättchens 90 ist der Fixierrüssel 16 als Koppelvorrichtung 92 ausgebildet, und ermöglicht auch im eingesteckten Zustand des Steckteils 22 im Schloss 23 ein Lesen des Detektierplättchens 90 über die Leseantenne 28 in Verbindung mit dem Lesegerät 30, sofern der Fixierrüssel 16 weiterhin die Hülse 86 durchgreift.

Der Vorteil dieser Ausführung liegt in dem einfachen Aufbau der objektseitigen Andock-, Identifikations- und Registrierungsmittel, die weder ein Schloss noch eine Stromversorgung benötigen und dennoch eine zuverlässige Sicherung und Überwachung ermöglichen.

## Patentansprüche

1. Objektsicherungssystem, bestehend aus wenigstens einer Station und wenigstens einem Objekt, wobei die wenigstens eine Station und das wenigstens eine Objekt mit wenigstens einem kompatiblen Andockmittel ausgestattet sind und die wenigstens eine Station oder das wenigstens eine Objekt Identifikations- und Registrierungsmittel umfassen, **dadurch gekennzeichnet, dass** an der wenigstens einen Station oder an dem wenigstens einem Objekt ein Steckteil eines flexiblen Fixierrüssels in einem durch eine Verriegelungsvorrichtung verriegelbaren, aber durch eine Freigabevorrichtung öffnebaren Schloss fixierbar ist und am Fixierrüssel ein Identifikations- und Registrierdaten enthaltendes Detektierplättchen und an dem Schloss oder in der Nähe des Schlosses oder an dem Andockmittel oder in der Nähe des Andockmittels ein Daten des Detektierplättchens lesendes Lesegerät oder eine Leseantenne des Lesegeräts oder ein Daten des Detektierplättchens schreibendes und lesendes Schreib-Lesegerät oder eine Schreib-Leseantenne des Schreib-Lesegeräts angeordnet sind und dass das Lesegerät oder Schreib-Lesegerät mit einem Steuergerät aus der Menge Steuer-, Identifikations- und Registrierungsschaltung verbunden oder gekoppelt ist.

2. Objektsicherungssystem, bestehend aus wenigstens einer Station und wenigstens einem Objekt, wobei die wenigstens eine Station und das wenigstens eine Objekt mit wenigstens einem kompatiblen Andockmittel ausgestattet sind und die wenigstens eine Station oder das wenigstens eine Objekt Identifikations- und Registrierungsmittel umfassen, **dadurch gekennzeichnet, dass** an der wenigstens einen Station oder an dem wenigstens einem Objekt ein Steckteil eines flexiblen Fixierrüssels in einem durch eine Verriegelungsvorrichtung verriegelbaren, aber durch eine Freigabevorrichtung öffnebaren Schloss fixierbar ist und an dem Schloss oder in der Nähe des Schlosses oder an dem Andockmittel oder in der Nähe des Andockmittels ein Identifikations- und Registrierdaten enthaltendes Detektierplättchen und am Fixierrüssel ein Daten des Detektierplättchens lesendes Lesegerät oder eine Leseantenne des Lesegeräts oder ein Daten des Detektierplättchens schreibendes und lesendes Schreib-Lesegerät oder eine Schreib-Leseantenne des Schreib-Lesegeräts angeordnet sind und dass das Lesegerät oder Schreib-Lesegerät mit einem Steuergerät aus der Menge Steuer-, Identifikations- und Registrierungsschaltung verbunden oder gekoppelt ist.

3. Objektsicherungssystem nach Anspruch 1, **dadurch gekennzeichnet, dass** das Detektierplättchen im Steckteil des Fixierrüssels und das Lesegerät oder Schreib-Lesegerät oder eine Leseantenne des Lesegeräts oder Schreib-Leseantenne des Schreib-Lesegeräts im Schloss in axialer Flucht oder koaxial zum eingesteckten Steckteil angeordnet sind.

4. Objektsicherungssystem nach Anspruch 2, **dadurch gekennzeichnet, dass** das Lesegerät oder Schreib-Lesegerät oder eine Leseantenne des Lesegeräts oder Schreib-Leseantenne des Schreib-Lesegeräts im Steckteil des Fixierrüssels und das Detektierplättchen im Schloss in axialer Flucht oder koaxial zum eingesteckten Steckteil angeordnet sind.

5. Objektsicherungssystem nach Anspruch 1, **dadurch gekennzeichnet, dass** das Detektierplättchen auf einer Manschette des Fixierrüssels oder dessen Steckteils an oder nahe der Verbindungsstelle zwischen Fixierrüssel und Steckteil und das Lesegerät oder Schreib-Lesegerät oder eine Leseantenne des Lesegeräts oder Schreib-Leseantenne des Schreib-Lesegeräts am Schloss nahe der Position der Manschette bei eingesteckten Steckteil angeordnet sind.

6. Objektsicherungssystem nach Anspruch 2, **dadurch gekennzeichnet, dass** das Lesegerät oder Schreib-Lesegerät oder eine Leseantenne des Lesegeräts oder Schreib-Leseantenne des Schreib-Lesegeräts auf einer Manschette des Fixierrüssels oder dessen Steckteils an oder nahe der Verbindungsstelle zwischen Fixierrüssel und Steckteil und das Detektierplättchen am Schloss nahe der Position der Manschette bei eingesteckten Steckteil angeordnet sind.

7. Objektsicherungssystem nach einem der Ansprüche 1 bis 6, **dadurch gekennzeichnet, dass** der Fixierrüssel an der Station und das Schloss am Objekt angeordnet sind, wobei das Andockmittel durch das Schloss selbst gebildet ist.

8. Objektsicherungssystem nach einem der Ansprüche 1 bis 6, **dadurch gekennzeichnet, dass** der Fixierrüssel und das Schloss am Objekt und das Andockmittel an der Station angeordnet sind, wobei das Andockmittel durch eine vom Fixierrüssel durchgriffene Hülse gebildet ist.

9. Objektsicherungssystem nach einem der Ansprüche 1 bis 6, **dadurch gekennzeichnet, dass** der Fixierrüssel am Objekt und das Schloss an der Station angeordnet sind, wobei das Andockmittel durch das Schloss selbst gebildet ist.

10. Objektsicherungssystem nach einem der Ansprüche 1 bis 6, **dadurch gekennzeichnet, dass** der Fixierrüssel und das Schloss an der Station und das Andockmittel am Objekt angeordnet sind, wobei das Andockmittel durch eine vom Fixierrüssel durchgriffene Hülse gebildet ist.

11. Objektsicherungssystem nach Anspruch 8 oder 10, **dadurch gekennzeichnet, dass** in der Hülse des Andockmittels wenigstens ein mit einem Nutzer-Kommunikationsterminal oder einer Zentrale verbundenes Schreibgerät oder wenigstens eine Schreibantenne des Schreibgeräts oder wenigstens ein Lesegerät oder wenigstens eine Leseantenne des Lesegeräts oder wenigstens ein Schreib-Lesegerät oder wenigstens eine Schreib-Leseantenne des Schreib-Lesegeräts angeordnet ist und dass das Schreibgerät oder Lesegerät oder Schreib-Lesegerät bei durchgestecktem Fixierrüssel durch eine Koppelvorrichtung mit dem Steuergerät aus der Menge Steuer-, Identifikations- und Registrierungsschaltung gekoppelt ist.

12. Objektsicherungssystem nach Anspruch 11, **dadurch gekennzeichnet, dass** in der Hülse des Andockmittels nebeneinander drei Schreibgeräte oder Schreibantennen der Schreibgeräte oder drei Lesegeräte oder Leseantennen der Lesegeräte oder drei Schreib-Lesegeräte oder Schreib-Leseantennen der Schreib-Lesegeräte angeordnet sind.

13. Objektsicherungssystem nach Anspruch 12, **dadurch gekennzeichnet, dass** das mittlere Schreibgerät oder die mittlere Schreibantenne des Schreibgeräts oder das mittlere Lesegerät oder die mittlere Leseantenne des Lesegeräts oder das mittlere Schreib-Lesegerät oder die mittlere Schreib-Leseantenne des Schreib-Lesegeräts in der Hülse nach außen abgeschirmt ist.

14. Objektsicherungssystem nach Anspruch 8 oder 10, **dadurch gekennzeichnet, dass** in der Hülse des Andockmittels wenigstens ein Detektierplättchen angeordnet ist, das bei Durchstecken des Fixierrüssels mit dem Steuergerät aus der Menge Steuer-, Identifikations- und Registrierungsschaltung vorübergehend oder bei durchgestecktem Fixierrüssel durch eine Koppelvorrichtung gekoppelt ist.

15. Objektsicherungssystem nach Anspruch 14, **dadurch gekennzeichnet, dass** in der Hülse des Andockmittels nebeneinander drei Detektierplättchen angeordnet sind.

16. Objektsicherungssystem nach Anspruch 15, **dadurch gekennzeichnet, dass** das mittlere Detektierplättchen in der Hülse nach außen abgeschirmt ist.

17. Objektsicherungssystem nach einem der Ansprüche 8 bis 16, **dadurch gekennzeichnet, dass** in der Hülse eine Durchstecksperre angeordnet ist, die nur durch eine Berechtigungsabfrage vorübergehend lösbar ist.

18. Objektsicherungssystem nach einem der Ansprüche 11 bis 17, **dadurch gekennzeichnet, dass** die Koppelvorrichtung an dem, auf dem oder in dem Fixierrüssel angeordnet und als galvanische oder induktive oder kapazitive Kopplung ausgebildet ist.

19. Objektsicherungssystem nach einem der Ansprüche 1 bis 18, **dadurch gekennzeichnet, dass** zwischen dem Steuergerät aus der Menge Steuer-, Identifikations- und Registrierungsschaltung und einem Nutzer-Kommunikationsterminal oder zwischen dem Steuergerät und einer Zentrale oder zwischen dem Steuergerät und der Zentrale unter Zwischenschaltung des Nutzer-Kommunikationsterminals als Relaisstation ein mono- oder bidirektionaler Datenübertragungsweg angeordnet ist.

20. Objektsicherungssystem nach Anspruch 19, **dadurch gekennzeichnet, dass** der Datenübertragungsweg ein Medium oder eine Kombination von Medien aus der Menge Drahtleitung, Glasfaserleitung, Funk oder körperlicher, von einem Lesegerät oder Schreibgerät oder Schreib-Lesegerät zu einem Lesegerät oder Schreibgerät oder Schreib-Lesegerät zu transportierendem Datenträger umfasst.

21. Objektsicherungssystem nach einem der Ansprüche 1 bis 20, **dadurch gekennzeichnet, dass** der Datenübertragungsweg eine Verschlüsselungsvorrichtung umfasst.

22. Objektsicherungssystem nach einem der Ansprüche 1 bis 21, **dadurch gekennzeichnet, dass** die Daten auf dem Detektierplättchen verschlüsselt gespeichert sind.

23. Objektsicherungssystem nach einem der Ansprüche 1 bis 22, **dadurch gekennzeichnet, dass** die Freigabevorrichtung einen elektromechanischen Antrieb umfasst, der einen Riegel in eine Entriegelungsposition überführt.

24. Objektsicherungssystem nach einem der Ansprüche 1 bis 23, **dadurch gekennzeichnet, dass** die Freigabevorrichtung einen manuell zu betätigen Antrieb umfasst, der mit dem Riegel über eine elektrisch oder elektromagnetisch aktivierbare Kupplung gekoppelt ist und einen Riegel in eine Entriegelungsposition überführt.

25. Objektsicherungssystem nach einem der Ansprüche 1 bis 24, **dadurch gekennzeichnet, dass** die Freigabevorrichtung eine im Schloss angeordnete Feder umfasst, die durch das eingesteckte Steckteil zusammengedrückt wird und nach Überführen des Riegels in die Entriegelungspositon entspannt und das Steckteil automatisch aus dem Schloss drückt.

26. Objektsicherungssystem nach einem der Ansprüche 1 bis 25, **dadurch gekennzeichnet, dass** das Schloss oder das Andockmittel eine Verriegelungserkennungsvorrichtung umfasst.

27. Objektsicherungssystem nach Anspruch 26, **dadurch gekennzeichnet, dass** die Verriegelungserkennungsvorrichtung eine logische UND-Verknüpfungsauswertungschaltung oder -programmroutine aus Lesbarkeit des Detektierplättchens durch das Lesegerät einerseits und mechanischer Position eines Riegels in einer Verriegelungsstellung oder mechanischer Position des Steckteils im Schloss andererseits umfasst.

28. Objektsicherungssystem nach einem der Ansprüche 1 bis 27, **dadurch gekennzeichnet, dass** die Freigabevorrichtung ein zusätzliches Lesegerät oder Schreib-Lesegerät für Nutzer-Identdatenträger sowie eine Auswertevorrichtung für Identdaten umfasst und durch die Auswertevorrichtung bei übereinstimmenden Identdaten ein Freigabesignal oder abwechselnd ein Freigabesignal und Sperrsignal generiert wird.

29. Objektsicherungssystem nach Anspruch 28, **dadurch gekennzeichnet, dass** mittels des Nutzer-Identdatenträgers und der Auswertevorrichtung der elektromechanische Antrieb aktivierbar ist, der einen Riegel in eine Entriegelungsposition überführt.

30. Objektsicherungssystem nach Anspruch 28, **dadurch gekennzeichnet, dass** mittels des Nutzer-Identdatenträgers und der Auswertevorrichtung die Kupplung aktivierbar ist, die den manuell zu betätigen Antrieb mit dem Riegel koppelt.

31. Objektsicherungssystem nach einem der Ansprüche 24 bis 29, **dadurch gekennzeichnet, dass** die elektrischen oder elektronischen Komponenten der Station oder des Objekts über eine Zeitschaltvorrichtung vorübergehend durch eine Batterie oder einen Akku gespeist sind, und die Zeitschaltvorrichtung durch eine Schaltstellung des manuell zu betätigenden Antriebs einschaltbar ist.

32. Objektsicherungssystem nach einem der Ansprüche 25 bis 31, **dadurch gekennzeichnet, dass** die elektrischen oder elektronischen Komponenten der Station oder des Objekts über eine Zeitschaltvorrichtung vorübergehend durch eine Batterie oder einen Akku gespeist sind, und die Zeitschaltvorrichtung bei Einstecken des Steckteils des Rüssels in das Schloss durch einen Schaltkontakt oder durch die Verriegelungserkennungsvorrichtung einschaltbar ist.

33. Objektsicherungssystem nach einem der Ansprüche 28 bis 32, **dadurch gekennzeichnet, dass** der von einem Schreibgerät oder Lesegerät oder Schreib-Lesegerät eines Nutzer-Kommunikationsterminals oder einer Zentrale zu einem Schreibgerät oder Lesegerät oder Schreib-Lesegerät eines Steuergeräts aus der Menge Steuer-, Identifikations- und Registrierungsschaltung oder einer Freigabevorrichtung oder in umgekehrter Richtung zu transportierende Datenträger als Registrierungs- und Zustandsdatenträger mit dem Nutzer-Identdatenträger kombiniert ist.

34. Objektsicherungssystem nach einem der Ansprüche 1 bis 33, **dadurch gekennzeichnet, dass** am Objekt oder an der Station zusätzlich ein das Steckteil aufnehmendes und verriegelndes, durch eine elektromechanische Freigabevorrichtung oder einen manuell zu betätigen Schlüssel oder Betätigungsstift öffnebares Schloss angeordnet ist.

35. Objektsicherungssystem nach einem der Ansprüche 8, 9, 11 bis 34, **dadurch gekennzeichnet, dass** der Fixierrüssel zusätzlich als temporäre Objektfixiervorrichtung ausgebildet ist und dass das am Objekt angeordnete Schloss einen Schlüssel umfasst, der bei nicht im objektseitigen Schloss eingestecktem Steckteil des Fixierrüssels gegen Herausziehen blockiert ist und bei eingestecktem Steckteil des Fixierrüssels unblockiert, aber gegen Herausfallen fixiert, jedoch manuell entfernbar ist.

36. Objektsicherungssystem nach Anspruch 35, **dadurch gekennzeichnet, dass** der Schlüssel bei nicht im objektseitigen Schloss eingestecktem Steckteil des Fixierrüssels zusätzlich in einem Gehäuse versenkt ist.

37. Objektsicherungssystem nach einem der Ansprüche 1 bis 36, **dadurch gekennzeichnet, dass** ein Nutzer-Kommunikationsterminal eine Anzeigevorrichtung, eine Lese- und/oder Eingabevorrichtung aus der Menge Nutzerdatenträger, Spracheingaben oder manuelle Tastatureingaben, sowie einen Datenspeicher umfasst.

38. Objektsicherungssystem nach Anspruch 37, **dadurch gekennzeichnet, dass** das Nutzer-Kommunikationsterminal zusätzlich eine Ausgabe- und Rücknahmevorrichtung für Nutzer-Identdatenträger oder kombinierte Registrierungs-, Zustands- und Nutzer-Identdatenträger umfasst.

39. Objektsicherungssystem nach Anspruch 38, **dadurch gekennzeichnet, dass** die Ausgabe- und Rücknahmevorrichtung ein Schreiblesegerät für Nutzer-Identdatenträger oder kombinierte Registrierungs-, Zustands- und Nutzer-Identdatenträger sowie eine autarke Verrechnungsvorrichtung oder einen Datenübertragungsweg zu einer Verrechnungsvorrichtung einer Zentrale umfasst.

40. Objektsicherungssystem nach einem der Ansprüche 28 bis 39, **dadurch gekennzeichnet, dass** die Daten auf dem Nutzer-Identdatenträger oder dem Registrierungs-, Zustands- und Nutzer-Identdatenträger verschlüsselt gespeichert sind.

41. Objektsicherungssystem nach einem der Ansprüche 38 bis 40, **dadurch gekennzeichnet, dass** das Nutzer-Kommunikationsterminal zusätzlich ein Lesegerät oder Schreiblesegerät für bargeldlose Zahlungsmedien umfasst.

42. Objektsicherungssystem nach einem der Ansprüche 38 bis 41, **dadurch gekennzeichnet, dass** das Nutzer-Kommunikationsterminal zusätzlich ein Eingabe und Wechselgerät für Bargeld umfasst.

43. Objektsicherungssystem nach einem der Ansprüche 1 bis 42, **dadurch gekennzeichnet, dass** die Station oder das Nutzer-Kommunikationsterminal oder die Station und das Nutzer-Kommunikationsterminal eine netzunabhängige, vorzugsweise solare und/oder windgetriebene, akkugestützte Stromversorgung aufweisen.
